# EUROPÄISCHE PATENTSCHRIFT

(11) **EP 2 625 080 B1**
(45) Veröffentlichungstag und Bekanntmachung des Hinweises auf die Patenterteilung: **08.06.2016**
(21) Anmeldenummer: 11764682.8
(22) Anmeldetag: 29.09.2011
(51) Int. Cl.: B60W 30/18, B60W 50/08

(54) **VERFAHREN ZUM ENERGIEOPTIMALEN REKUPERIEREN VON BEWEGUNGSENERGIE EINES KRAFTFAHRZEUGS**
METHOD FOR RECUPERATING KINETIC ENERGY OF A MOTOR VEHICLE IN AN OPTIMUM WAY IN TERMS OF ENERGY
PROCÉDÉ PERMETTANT UNE RÉCUPÉRATION OPTIMALE DE L'ÉNERGIE CINÉTIQUE D'UN VÉHICULE AUTOMOBILE

(30) Priorität: 09.10.2010 DE 102010048103
(43) Veröffentlichungstag der Anmeldung: 14.08.2013
(73) Patentinhaber: Audi AG, 85045 Ingolstadt (DE)
(72) Erfinder: REMLINGER, Wolfram, 85049 Ingolstadt (DE)
(74) Vertreter: Herbst, Matthias Heinz
(86) Internationale Anmeldenummer: PCT/EP2011/004855
(87) Internationale Veröffentlichungsnummer: WO 2012/045409

(56) Entgegenhaltungen:
- EP-A1- 2 275 314
- EP-A2- 1 923 291
- WO-A1-2010/046733
- DE-A1- 10 141 805
- DE-A1-102008 000 131
- DE-A1-102009 014 352

## Beschreibung

Die Erfindung betrifft den Betrieb eines Kraftfahrzeugs, nämlich insbesondere einen Betriebsmodus, in dem Bewegungsenergie des Kraftfahrzeugs in elektrische Energie gewandelt wird. Dies bezeichnet man als Rekuperieren von Bewegungsenergie. Das Verfahren kann in einem Kraftfahrzeug mit ausschließlich elektrischem Antrieb Anwendung finden, wobei beim Rekuperieren eine elektrische Maschine als Generator arbeitet, oder er kann in einem Kraftfahrzeug mit Hybridantrieb Anwendung finden, wenn also eine Verbrennungskraftmaschine und ein weiterer Antrieb in Form einer elektrischen Maschine zusammen den Antrieb des Kraftfahrzeugs bilden.

Im Zusammenhang mit der Steuerung und/oder Regelung eines Hybridantriebs ist es bekannt, anhand von einer Kommunikation des Kraftfahrzeugs mit ortsfesten und/oder sich bewegenden Gegenstellen prädiktiv eine Steuerung oder Regelung eines Hybridantriebs in einem Kraftfahrzeug vorzunehmen, indem eine Betriebsstrategie ausgewählt wird. Die Betriebsstrategie kann als Betriebszustand unter anderem auch das Rekuperieren von Bremsenergie unterscheiden und einstellen.

Bei Kraftfahrzeugen, die ausschließlich oder weitgehend mit elektrischem Antrieb betrieben werden, kommt es wesentlich auf die Reichweite an, also wie weit das Kraftfahrzeug fahren kann, ohne dass ein elektrochemischer Energiespeicher (eine Batterie) des Kraftfahrzeugs an einem außerhalb des Kraftfahrzeugs befindlichen Anschluss angeschlossen und geladen werden muss.

Beim Bremsen geht Energie in Form von Wärmeenergie verloren. Durch das Rekuperieren kann ein Anteil an der Bewegungsenergie jedoch in solche Energieformen gewandelt werden, die eine nachfolgende Nutzung zum Betrieb des Kraftfahrzeugs ermöglichen. Gewöhnlich wird durch das Rekuperieren die Reichweite des Kraftfahrzeugs erhöht. Es gibt nun eine ganz bestimmte Stärke der Bremsung (gemessen als negative Beschleunigung), bei der das Rekuperieren optimal ist; es kann eine bestimmte Menge an Energie pro Zeit (Leistungsdichte) in einen Energiespeicher eingebracht werden, und bei einer zu starken Bremsung wird dem Kraftfahrzeug mehr Bewegungsenergie entnommen, als gleichzeitig in den Energiespeicher gespeichert werden kann, bei einer zu schwachen Bremsung ist der Bremsweg zu lang.

Es ist vorliegend davon ausgegangen, dass man den Bremsvorgang optimieren kann. Verfahren zum Optimieren eines solchen Bremsvorgangs sind beispielsweise aus der DE 10 2007 010 188 A1 und der DE 10 2008 024 622 A1 bekannt. Es geht hierbei insbesondere um das Zuschalten oder Abschalten von Bremsen und Bremskreisen.

Für ein mögliches Rekuperieren von Bewegungsenergie eines Fahrzeugs wird in der DE 10 2008 000 131 A1 unter Berücksichtigung eines zu erwartenden Betriebszustandsverlaufs des Fahrzeugs kinetische Energie des Fahrzeugs für den Betrieb desselben verwendet. Auch die WO 2010/046733 A1 beschäftigt sich mit einer Rekuperation. Dort wird eine Methode beschrieben, mit welcher bestimmt werden kann, wie viel kinetische Energie bei einem Bremsvorgang eines Hybridfahrzeugs rekuperiert werden kann. In der EP 2 275 314 A1 wird ermittelt, ob eine erforderliche Bremsung rein rekuperativ erfolgen kann.

Die DE 101 41 805 A1 offenbart eine Fahrzeugsteuereinrichtung, welche den Fahrer unterstützt, eine Fahrstrecke mit möglichst wenig Kraftstoffverbrauch zurückzulegen. Dazu ermittelt eine solche Fahrzeugsteuereinrichtung die optimale Geschwindigkeit bezüglich der Fahrstrecke oder die optimale Fahrstrecke bezüglich einer vorgegebenen Geschwindigkeit, in dem sie eigene aktuelle Fahrzeugdaten wie Position und Geschwindigkeit zu aktuellen Fahrstreckendaten wie Streckengeographie, Positionen anderer Verkehrsteilnehmer und Ampelphasen in Bezug setzt. Auch die DE 10 2009 014 352 A1 und die EP 1 923 291 A2 ermöglichen einen kraftstoffsparenden Fahrbetrieb eines Kraftfahrzeuges. Dort werden Verfahren zur Schwungnutzung eines Kraftfahrzeugs mittels eines Aufrollens beschrieben.

Es ist Aufgabe der vorliegenden Erfindung, ein energieoptimales Rekuperieren von Bewegungsenergie eines Kraftfahrzeugs zu ermöglichen. Die Aufgabe wird durch ein Verfahren mit den Merkmalen gemäß Patentanspruch 1 gelöst.

Das erfindungsgemäße Verfahren umfasst somit, dass bei Gegebensein zumindest einer vorbestimmten Bedingung während der Fahrt des Kraftfahrzeugs eine bezüglich der rekuperierbaren Energie optimale Bremsstrecke ermittelt wird und ein Signal für den Fahrzeugführer erzeugt wird, über das diesem bezüglich zumindest einer Maßnahme zum oder beim Bremsen des Fahrzeugs mitgeteilt wird, in welcher Form diese vorzunehmen ist, damit über die optimale Bremsstrecke gebremst wird.

Bei dem erfindungsgemäßen Verfahren ist zumindest davon ausgegangen, dass sich die pro Zeit rückgewinnbare Energie in Abhängigkeit von der momentanen Geschwindigkeit des Kraftfahrzeugs in eine Bremsstrecke übersetzen lässt. Der Fahrzeugführer soll dazu gebracht werden, genau so zu bremsen, dass das Fahrzeug einen möglichst hohen Anteil der Bewegungsenergie rekuperieren kann. Das für den Fahrzeugführer erzeugte Signal hilft somit dem Fahrzeugführer, das Kraftfahrzeug energieoptimal zu betreiben.

Die Erfindung lässt bewusst dem Fahrzeugführer eine weitgehende Autonomie; nicht immer ist die aus Gründen der Energiebilanz optimale Bremsstrecke tatsächlich die beste, denn es gibt außerhalb der Energiebetrachtungen liegende Gründe: einmal wird der Fahrzeugführer schärfer bremsen wollen, um eine Gefahr abzuwenden, ein andermal will er vielleicht gar nicht bremsen, auch wenn aufgrund der vorbestimmten Bedingung das Kraftfahrzeug ein Bremsen für geboten hält.

Das Gegebensein der vorbestimmten Bedingungen kann durch das Kraftfahrzeug selbst aufgrund äußerer Gegebenheiten ermittelt werden, z. B. auch aufgrund einer Kommunikation mit fahrzeugexternen Objekten, oder dies kann auf eine Bedienhandlung des Kraftfahrzeugs zurückgehen.

In beiden Fällen ist ein Anlass zum Bremsen und damit zum Rekuperieren gegeben: entweder stellt das Kraftfahrzeug aufgrund äußerer Umstände fest, dass gebremst werden sollte, oder der Fahrzeughalter hat das Bremsen bereits veranlasst. Bei geeigneter Gestaltung kann die vorbestimmte Bedingung also so gewählt sein, dass bei allen möglichen Bremsvorgängen energieoptimales Rekuperieren unter Beteiligung des Fahrzeugführers ermöglicht wird.

Bei einer bevorzugten Ausführungsform wird durch das für den Fahrzeugführer erzeugte Signal diesem mitgeteilt, wann oder wo mit dem Bremsen zu beginnen ist. Beispielsweise kann durch ein akustisches Signal in einer bestimmten Zeitfolge mitgeteilt werden, wann zu bremsen ist. Durch ein optisches Signal, z. B. mithilfe eines kontaktanalogen Headup-Displays, kann ein Ort auf der Fahrbahn für den Fahrzeugführer ersichtlich sein, an dem mit dem Bremsen begonnen werden muss.

Bevorzugt wird durch das Signal dem Fahrzeugführer sogar die gesamte Bremsstrecke aufgezeigt. Insbesondere kann diese Strecke durch das Headup-Display angezeigt werden. Das Einblenden von Balken mithilfe eines Headup-Displays auf die Windschutzscheibe eines Kraftfahrzeugs ist als solches bekannt. Mithilfe solcher Balken oder ähnlicher Darstellungen lässt sich dem Fahrzeugführer ein solches Bild bieten, bei dem er auf der Fahrbahn virtuelle Markierungen sieht. Beispielsweise lässt sich das Ende der Bremsstrecke als Ende des genannten Balkens oder sonstwie hervorheben, damit der Fahrzeugführer beim Bremsen auf dieses Ende hin zielen kann.

Alternativ kann durch das Signal dem Fahrzeugführer eine aufzubringende Bremskraft aufgezeigt werden. Beispielsweise kann ein Referenzsignal abgegeben werden und ein Zusatzsignal, das von der tatsächlich aufgebrachten Bremskraft abhängig ist, und durch Abgleich der beiden Signale kann der Fahrzeugführer dann eine dem Referenzsignal entsprechende Bremskraft aufbringen, bei der energieoptimal rekuperiert wird. Dies ist sowohl mit akustischen als auch mit optischen Signalen möglich, z. B. über die Tonhöhe oder die Länge einer Balkendarstellung.

Alternativ zum Anzeigen der gesamten Bremsstrecke oder Mitteilen der aufzubringenden Bremskraft kann die Bremskraft durch das Kraftfahrzeug auch selbsttätig eingestellt werden, hat der Fahrzeugführer einmal entsprechend dem ersten mitgeteilten Signal mit dem Bremsen begonnen. Auch hier wird auf der optimalen Bremsstrecke dann gebremst, wenn das Kraftfahrzeug die Bremskraft entsprechend selbsttätig einstellt.

Das erfindungsgemäße Verfahren findet dann Anwendung, wenn durch das Kraftfahrzeug ein Zielpunkt für ein Bremsen identifiziert wird, wenn es z. B. aufgrund einer drahtlosen Übermittlung von Signalen "weiß", dass eine auf der Fahrstrecke kommende Ampel auf Rot steht. Die optimale Bremsstrecke wird dann so berechnet, dass sie an dem besagten Zielpunkt endet. In diesem Falle ist die vorbestimmte Bedingung somit durch das Kraftfahrzeug selbst ermittelt.

Alternativ kann die vorbestimmte Bedingung durch das Betätigen der Bremse durch den Fahrzeugführer selbst gegeben sein, das Verfahren also durch ein solches Betätigen der Bremse eingeleitet werden. Auch hier kann dann nachfolgend die Bremskraft dieses Kraftfahrzeugs selbsttätig eingestellt werden oder auch dem Fahrzeugführer aufgezeigt werden, und genauso kann auch die gesamte Bremsstrecke aufgezeigt werden, die nach Beginn des Bremsens in energieoptimaler Weise folgen würde.

Die pro Zeit in einen Energiespeicher einbringbare Energie kann von dessen Ladezustand abhängig sein. Deswegen wird bevorzugt der Ladenzustand derjenigen Batterie, in die beim Rekuperieren Energie eingespeist wird, beim Ermitteln der optimalen Bremsstrecke berücksichtigt.

Genauso kann ein Gefälle oder ein Anstieg der Fahrbahn und/oder ein Reibwert der Fahrbahn beim Ermitteln der optimalen Bremsstrecke ermittelt werden. Entweder sind diese Informationen aus einer Karte bekannt (z. B. in dem Navigationssystem des Kraftfahrzeugs), oder sie werden ständig oder kurzfristig nach Einleitung des erfindungsgemäßen Verfahrens gemessen.

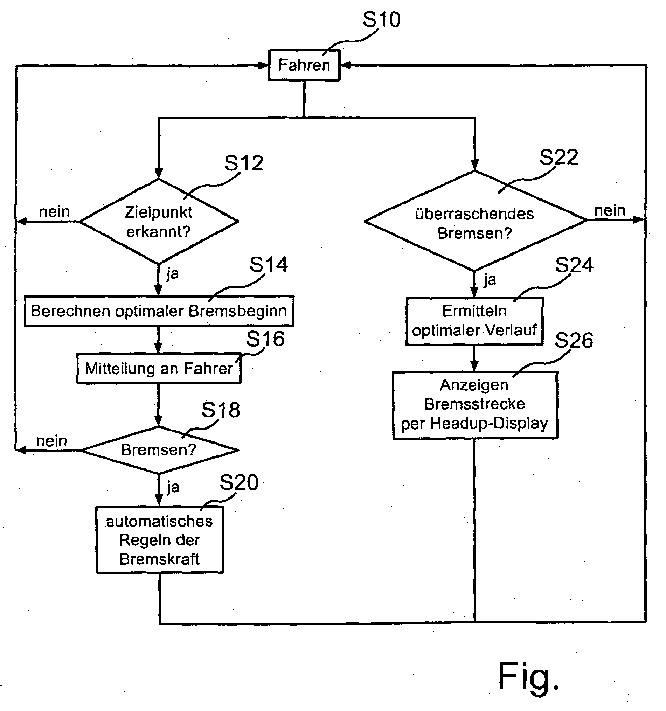

Nachfolgend wird eine bevorzugte Ausführungsform der Erfindung unter Bezug auf die Zeichnung beschrieben, in der die einzige Figur ein Flussschaubild zur Erläuterung des erfindungsgemäßen Verfahrens in einer bevorzugten Ausführungsform ist.

Das erfindungsgemäße Verfahren beginnt gemäß Schritt S10 damit, dass ein Kraftfahrzeug fährt. Es soll sich hierbei um ein solches Kraftfahrzeug handeln, das die Möglichkeit zum Rekuperieren seiner Bewegungsenergie bietet, wobei typischerweise ein elektrischer Antrieb in Form einer elektrischen Maschine in Umkehrung seiner üblichen Wirkung als Generator arbeitet, der Strom erzeugt, wobei der Strom in einen Energiespeicher geleitet wird, aus dem dann später die Energie zum Betreiben des elektrischen Antriebs und/oder anderer Verbraucher bereitgestellt wird. Der Energiespeicher kann eine elektrochemische Batterie oder ein Kondensator ("Supercap") sein, genauso auch ein Flywheel oder mit Druckluft bzw. hydraulisch arbeiten.

Beim Fahren eines Kraftfahrzeugs soll vorliegend eine ständige Überprüfung durch das Kraftfahrzeug erfolgen, ob ein Bremsvorgang eingeleitet werden muss. Vorliegend sei dies dadurch gegeben, dass das Kraftfahrzeug gemäß Schritt S12 überprüft, ob ein Zielpunkt erkannt wird, bis zu dem gebremst werden muss. Beispielsweise kann drahtlos an das Kraftfahrzeug durch eine Infrastruktureinrichtung, wie z. B. eine Ampel, ein Schild mit Geschwindigkeitsbegrenzung o. ä. mitgeteilt werden, dass gebremst werden muss; genauso kann auch durch Fahrzeug-zu-Fahrzeug-Kommunikation oder Messung mit einer Kamera ein anderes Fahrzeug als Hindernis erkannt werden. Solange kein Zielpunkt erkannt wird, fährt das Kraftfahrzeug weiter. Sobald ein Zielpunkt erkannt wird, wird gemäß Schritt S14 ein optimaler Bremsbeginn ermittelt. Dann wird gemäß Schritt S16 eine Mitteilung an den Fahrer gegeben, dass er mit dem Bremen zu beginnen hat. Beispielsweise kann durch in immer kürzeren Abständen aufeinanderfolgende Piepstöne, die in einen Dauerton übergehen, dem Fahrzeugführer ein Zeitpunkt mitgeteilt werden. Genauso kann über ein Headup-Display im Kraftfahrzeug ein Ort auf der Fahrbahn aus Sicht des Fahrers markiert werden, an dem der optimale Bremsbeginn erfolgt.

In Schritt S18 wird nun durch das Kraftfahrzeug überprüft, ob der Fahrer tatsächlich einen Bremsvorgang eingeleitet hat. Ist dies nicht der Fall, fährt das Kraftfahrzeug ganz normal weiter. Falls der Kraftfahrzeugführer einen Bremsvorgang eingeleitet hat, erfolgt gemäß Schritt S20 ein automatisches (Ein-) Regeln der Bremskraft derart, dass das Kraftfahrzeug möglichst viel seiner Bewegungsenergie rekuperieren kann. Das Kraftfahrzeug bremst somit auf einer energieoptimalen Bremsstrecke ab. Anschließend kann weitergefahren werden.

Unabhängig vom Überprüfen im Schritt S12 wird in Schritt S22 durch das Kraftfahrzeug ermittelt, ob der Fahrzeugführer selbst (überraschend) einen Bremsvorgang eingeleitet hat. Solange dies nicht der Fall ist, fährt das Kraftfahrzeug normal weiter. Falls ein überraschendes Bremsen in Schritt S22 ermittelt wurde, wird in Schritt S24 der optimale Verlauf des Bremsvorgangs ermittelt. Vorliegend ergibt sich der optimale Verlauf dadurch, dass mit einer bestimmten Bremskraft gebremst wird, so dass sich eine bestimmte Bremsstrecke ergibt. Die sich so ergebende (energieoptimale) Bremsstrecke wird dann per Headup-Display dem Fahrzeugführer mitgeteilt: Es wird beispielsweise einfach ein Balken so auf die Windschutzscheibe projiziert, dass der Fahrzeugführer diesen Balken als virtuell auf der Fahrbahn liegend erkennt, und das Ende des Balkens markiert das Ende des Bremsvorgangs. Der erfahrene Fahrer kann das Kraftfahrzeug so bremsen, dass er genau am Ende des Balkens zum Stehen kommt. Damit hat er im Wesentlichen energieoptimal gebremst.

Anschließend kann das Fahrzeug wieder wie vorher weiterfahren.

Das erfindungsgemäße Verfahren ist auch dann sinnvoll umsetzbar, wenn nur einer der beider Zweige, die mit dem Schritt S12 bzw. dem Schritt S22 beginnen, durchlaufen wird. Weitere Möglichkeiten sind denkbar, wie durch eine Mitteilung an den Fahrzeugführer bewirkt werden kann, dass energieoptimal Bewegungsenergie des Kraftfahrzeugs rekuperiert wird, wie also dem Fahrzeugführer mitgeteilt werden kann, welche Maßnahme zur Bedienung des Kraftfahrzeugs er zu treffen hat, um optimal zu rekuperieren. Nicht immer wird das Durchführen der Maßnahme als solches möglich sein, weil es außerhalb der Energieoptimierung gebende Umstände beim Führen eines Kraftfahrzeugs gibt. Beispielsweise kann im innerstädtischen Straßenverkehr ständig ein Hindernis auf der Fahrbahn auftreten, vor dem schneller gebremst werden muss, als das Kraftfahrzeug für notwendig hält. Genauso kann möglicherweise ein Hindernis auch umfahren werden, ohne dass gebremst werden muss.

Wird das erfindungsgemäße Verfahren dauerhaft beim Betrieb eines Kraftfahrzeugs umgesetzt, wird aber bei ausreichend verständigem Fahrzeugführen die Reichweite des Kraftfahrzeugs im Vergleich zu solchen Kraftfahrzeugen, bei denen die Erfindung nicht eingesetzt wird, erhöht.

## Patentansprüche

1. Verfahren zum energieoptimalen Rekuperieren von Bewegungsenergie eines Kraftfahrzeugs, wobei das Verfahren umfasst, dass bei Gegebensein zumindest einer vorbestimmten Bedingung während der Fahrt des Kraftfahrzeugs eine bezüglich der rekuperierbaren Energie optimale Bremsstrecke ermittelt wird und ein Signal für den Fahrzeugführer erzeugt wird, über das ihm bezüglich zumindest einer Maßnahme zum oder beim Bremsen des Kraftfahrzeugs mitgeteilt wird, in welcher Form diese vorzunehmen ist, damit über die optimale Bremsstrecke gebremst wird.

2. Verfahren nach Anspruch 1, bei dem durch das Kraftfahrzeug ein Zielpunkt für ein Bremsen identifiziert wird, und wobei die optimale Bremsstrecke am Zielpunkt endet.

3. Verfahren nach Anspruch 2, bei dem durch das Signal mitgeteilt wird, wann oder wo mit dem Bremsen zu beginnen ist.

4. Verfahren nach Anspruch 1, welches durch das Betätigen der Bremse durch den Fahrzeugführer eingeleitet wird.

5. Verfahren nach einem der Ansprüche 1 bis 4, bei dem durch das Signal dem Fahrzeugführer die gesamte Bremsstrecke aufgezeigt wird, vorzugsweise auf einem Headup-Display angezeigt wird.

6. Verfahren nach einem Ansprüche 1 bis 5, bei dem durch das Signal dem Fahrzeugführer eine aufzubringende Bremskraft aufgezeigt wird.

7. Verfahren nach einem der Ansprüche 1 bis 4, bei dem die Bremskraft des Kraftfahrzeugs selbsttätig eingestellt wird.

8. Verfahren nach einem der Ansprüche 1 bis 7, bei dem beim Rekuperieren Energie in eine Batterie eingespeist wird und der Ladezustand der Batterie beim Ermitteln der optimalen Bremsstrecke berücksichtigt wird.

9. Verfahren nach einem der Ansprüche 1 bis 8, bei dem ein Gefälle oder ein Anstieg der Fahrbahn und/oder ein Reibwert der Fahrbahn beim Ermitteln der optimalen Bremsstrecke berücksichtigt wird.

## Claims

1. A process for energy-optimised recuperation of the kinetic energy of a motor vehicle, whereby the process comprises that while the motor vehicle is being driven at least one predetermined condition for optimum braking distance related to recoverable energy is identified, and a signal is generated to the driver in which for or during braking of the motor vehicle he is provided at least one measure as regards what should be done to brake with an optimum braking distance.

2. The process according to claim 1, whereby a braking target point is identified via the motor vehicle, where the optimum braking distance ends at the target point.

3. A process according to claim 2, whereby the signal communicates when or where to start braking.

4. A process according to claim 1, which is initiated by actuation of the brake by the vehicle driver.

5. A process according to any one of claims 1 to 4, whereby via the signal the entire vehicle braking distance is indicated to the vehicle driver, which is preferably displayed on a headup display.

6. A process according to any one of claims 1 to 5, whereby via the signal the braking force is indicated to the vehicle driver.

7. A process according to any one of claims 1 to 4, in which the braking force of the vehicle is automatically adjusted.

8. A process according to any one of claims 1 to 7, in which the recuperated energy is fed into a battery and the state of charge of the battery is taken into account on determining the optimum braking distance.

9. A process according to any one of claims 1 to 8, whereby a downhill or uphill gradient of the roadway and/or a coefficient of friction of the road is taken into account in determining the optimum braking distance.

## Revendications

1. Procédé de récupération optimale de l'énergie cinétique d'un véhicule automobile, dans lequel le procédé implique qu'en présence d'au moins une condition prédéterminée au cours du déplacement du véhicule automobile, on détermine une distance de freinage optimale en matière d'énergie récupérable et le conducteur du véhicule reçoit un signal qui lui communique au moins une mesure pour freiner le véhicule automobile ou lors de ce freinage, indiquant sous quelle forme cette mesure doit être effectuée pour freiner sur la distance de freinage optimale.

2. Procédé selon la revendication 1, dans lequel un point de destination est identifié pour un freinage par le véhicule automobile et dans lequel la distance de freinage optimale se termine au point de destination.

3. Procédé selon la revendication 2, dans lequel le signal communique quand ou où il faut démarrer le freinage.

4. Procédé selon la revendication 1, qui est effectué par commande des freins par le conducteur du véhicule.

5. Procédé selon l'une quelconque des revendications 1 à 4, dans lequel la totalité de la distance de freinage est affichée au conducteur du véhicule par le signal, de préférence sur un affichage de pilotage.

6. Procédé selon l'une quelconque des revendications 1 à 5, dans lequel une force de freinage à appliquer est affichée par le signal à l'adresse du conducteur du véhicule.

7. Procédé selon l'une quelconque des revendications 1 à 4, dans lequel la force de freinage du véhicule automobile se règle automatiquement.

8. Procédé selon l'une quelconque des revendications 1 à 7, dans lequel, lors de la récupération, de l'énergie est stockée dans une batterie et l'état de charge de la batterie est prise en compte pour déterminer la distance de freinage optimale.

9. Procédé selon l'une quelconque des revendications 1 à 8, dans lequel une pente ou une montée de la chaussée et/ou un coefficient de frottement de la chaussée est ou sont pris en compte lors de la détermination de la distance de freinage optimale.
